# EUROPEAN PATENT APPLICATION

(11) **EP 3 677 238 A1**
(43) Date of publication of application: **08.07.2020**
(21) Application number: 18850549.9
(22) Date of filing: 27.08.2018
(51) Int. Cl.: A61J 1/05, B32B 27/18, B65D 51/00, B65D 53/04

(54) **NEEDLE PUNCTURE DETECTION SHEET**

(30) Priority: 30.08.2017 JP 2017166233; 06.12.2017 JP 2017234497; 06.12.2017 JP 2017234544
(71) Applicant: Kyodo Printing Co., Ltd., Tokyo 112-8501 (JP)
(72) Inventor: YAMAZAKI, Misato, Tokyo 112-8501 (JP); OSAWA, Azusa, Tokyo 112-8501 (JP); HAGIO, Yumiko, Tokyo 112-8501 (JP)
(74) Representative: Krauns, Christian
(86) International application number: PCT/JP2018/031612
(87) International publication number: WO 2019/044781

(57) **Abstract**

This needle puncture detection sheet 100 has a whitening resin layer 10 that, when punctured by an RB type injection needle having a diameter of 0.80 mm to form a puncture hole 50, whitens and forms a whitened region 60 having a width of at least 0.2 mm around the puncture hole 40.

## Description

### FIELD

The present invention relates to a needle puncture detection sheet, in particular, a lid material for needle puncture detection.

### BACKGROUND

Medicine in liquid form such as an injection solution or infusion is sometimes stored in a container having a cap in which a rubber stopper is fitted into an opening part. Sometimes a peelable material is pasted on top of the rubber stopper of the cap for the purpose of, for example, preventing contamination of the rubber stopper during storage, or indicating that the product has not been used. Medicines in this kind of container are used by peeling off the peelable material over the rubber stopper and inserting an injection needle into the rubber stopper.

However, there could be cases when, due to a mistake in usage method or due to a malicious attempt to deliberately insert a contaminant into the medicine, a needle, conventionally an injection needle, is inserted into the rubber stopper through the peelable material without removing the peelable material. It was difficult to determine whether a needle had punctured the peelable material in such cases because it was not initially considered that a needle might be inserted through the peelable material.

PTL 1 and PTL 2 relate to an infusion cap in which traces of an injection needle remain, and describe an infusion cap having a configuration in which a thermoplastic elastomer stopper is provided internally in a thermoplastic resin outer frame. In the infusion cap, a thermoplastic resin membrane having a thickness of 1.0 mm or less is provided so as to cover the needle puncture surface of the stopper at a gap of at most 5 mm from the needle puncture surface of the stopper.

PTL 3 relates to a lid of a medicinal bottle that enables identification of the contained liquid medicine when viewed from above and discrimination of whether the contained liquid medicine has been used or not. PTL 3 describes the lid of a medicinal bottle attached to a medicinal bottle in which the bottle mouth is closed by a rubber stopper, wherein the lid of the medicinal bottle consists of a combination of a cap consisting of a thin metal sheet and a synthetic resin lid body engaging an inner side of the cap. In the lid, the cap is formed as a reverse-bottomed cylinder having a top plate on the waist upper surface, and a through hole is provided in the center portion of the top plate of the cap. The upper surface of the lid can engage with the through hole of the top plate of the cap, a portion of the part which engages with the through hole is formed to be thin, and the lower surface of the thin portion is formed as a shape that does not contact the upper surface of the rubber stopper which is closing the bottle mouth of the medicinal bottle.

### [CITATION LIST]

### [PATENT LITERATURE]

[PTL 1] Japanese Unexamined Patent Publication (Kokai) No. 2011-78810
[PTL 2] Japanese Registered Patent No. 4904501
[PTL 3] Japanese Unexamined Patent Publication (Kokai) H10-310154

### SUMMARY

### [TECHNICAL PROBLEM]

The object of the present invention is to provide a sheet that enables easy and accurate assessment of whether a needle has been inserted by leaving an observable mark that visually highlights the puncture hole in the case that a needle was inserted due to mistaken or improper use.

### [SOLUTION TO PROBLEM]

The present invention is as follows.

### <Aspect 1>

A needle puncture detection sheet having a whitening resin layer, wherein the whitening resin layer is a resin layer that, when a puncture hole is formed by inserting an RB type injection needle having a diameter of 0.80 mm, whitens to a width of 0.2 mm or more around the puncture hole.

### <Aspect 2>

The needle puncture detection sheet of aspect 1, wherein the whitening resin layer is a layer of resin having a sea island-type microphase separation structure composed of a continuous phase comprising a hard segment and a dispersed phase comprising a soft segment.

### <Aspect 3>

The needle puncture detection sheet of aspect 2, wherein the hard segment comprises one or more selected from the group consisting of polystyrene, crystalline polyolefin, and acrylonitrile-styrene copolymer, and the soft segment comprises one or more selected from the group consisting of butadiene rubber, styrene-butadiene rubber, and amorphous polyolefin.

### <Aspect 4>

The needle puncture detection sheet of any one of aspects 1 to 3, wherein the whitening resin layer is a layer of resin of one or more selected from the group consisting of high impact polystyrene, block copolymer type polypropylene, and acrylonitrile-butadiene-styrene copolymer.

### <Aspect 5>

The needle puncture detection sheet of any one of aspects 1 to 3, wherein the whitening resin layer is a layer of block copolymer-type polypropylene.

### <Aspect 6>

The needle puncture detection sheet of any one of aspects 1 to 5, wherein the whitening resin layer is colored.

### <Aspect 7>

The needle puncture detection sheet of aspect 6, wherein the L-value of the whitening resin layer is 75 or less.

### <Aspect 8>

The needle puncture detection sheet of any one of aspects 1 to 7, wherein the needle puncture detection sheet has a reinforcement layer on either one side or both sides of the whitening resin layer.

### <Aspect 9>

The needle puncture detection sheet of aspect 8, wherein the reinforcement layer is a layer of a thermoplastic resin that does not whiten when punctured by a needle.

### <Aspect 10>

The needle puncture detection sheet of any one of aspects 1 to 7, additionally having a sealant layer or an adhesive layer laminated on the whitening resin layer.

### <Aspect 11>

The needle puncture detection sheet of aspect 10, wherein the sealant layer or adhesive layer is colored.

### <Aspect 12>

The needle puncture detection sheet of aspect 11, wherein the L-value of the sealant layer or the adhesive layer is 75 or less.

### <Aspect 13>

The needle puncture detection sheet of any one of aspects 1 to 7, additionally having a colored resin layer laminated on the whitening resin layer.

### <Aspect 14>

The needle puncture detection sheet of any one of aspects 10 to 12, additionally having a colored resin layer, wherein the whitening resin layer, the colored resin layer and the sealant layer or adhesive layer are laminated in this order.

### <Aspect 15>

The needle puncture detection sheet of aspect 8 or 9, additionally having a colored resin layer, wherein
the reinforcement layer, the whitening resin layer, and the colored resin layer are laminated in this order;
the whitening resin layer, the reinforcement layer, and the colored resin layer are laminated in this order; or
the reinforcement layer, the whitening resin layer, the reinforcement layer, and the colored resin layer are laminated in this order.

### <Aspect 16>

The needle puncture detection sheet of aspect 8 or 9, additionally having a sealant layer or adhesive layer, wherein
the reinforcement layer, the whitening resin layer, and the sealant layer or adhesive layer are laminated in this order;
the whitening resin layer, the reinforcement layer, and the sealant layer or the adhesive layer are laminated in this order; or
the reinforcement layer, the whitening resin layer, the reinforcement layer, and the sealant layer or the adhesive layer are laminated in this order.

### <Aspect 17>

The needle puncture detection sheet of aspect 8 or 9, additionally having a colored resin layer and a sealant layer or an adhesive layer, wherein
the reinforcement layer, the whitening resin layer, the colored resin layer, and the sealant layer or adhesive layer are laminated in this order;
the whitening resin layer, the reinforcement layer, the colored resin layer, and the sealant layer or the adhesive layer are laminated in this order; or
the reinforcement layer, the whitening resin layer, the reinforcement layer, the colored resin layer, and the sealant layer or the adhesive layer are laminated in this order.

### <Aspect 18>

The needle puncture detection sheet of any one of aspects 13 to 15 and 17, wherein the L-value of the colored resin layer is 75 or less.

### <Aspect 19>

The needle puncture detection sheet of any one of aspects 1 to 18, which is a lid material.

### <Aspect 20>

A lidded container for liquid medicine having a container having an opening part, a liquid medicine stored in the container, a stopper that seals the opening part of the container, and a lid material covering the stopper, wherein the lid material is the needle puncture detection sheet of aspect 19.

### [ADVANTAGEOUS EFFECTS OF INVENTION]

The needle puncture detection sheet of the present invention enables easy and accurate assessment of whether a needle has been inserted by leaving an observable mark that visually highlights the puncture hole in the case that a needle was inserted due to mistaken or improper use. The needle puncture detection sheet according to the special aspects of the present invention enables easy and accurate assessment of whether a needle has been inserted and can be applied to locations where a needle puncturing was not originally considered, for example, the peelable material of an infusion bag.

### BRIEF DESCRIPTION OF DRAWINGS

FIG. 1 is a schematic perspective view for explaining the effect of the needle puncture detection sheet of the present invention.
FIG. 2 is a schematic cross-section showing one example of a layer configuration of the needle puncture detection sheet of the present invention.
FIG. 3 is a schematic cross-section showing another example of a layer configuration of the needle puncture detection sheet of the present invention.
FIG. 4 is a schematic cross-section showing another example of a layer configuration of the needle puncture detection sheet of the present invention.
FIG. 5 is a schematic cross-section showing another example of a layer configuration of the needle puncture detection sheet of the present invention.
FIG. 6 is a schematic cross-section showing another example of a layer configuration of the needle puncture detection sheet of the present invention.
FIG. 7 is a schematic cross-section showing another example of a layer configuration of the needle puncture detection sheet of the present invention.
FIG. 8 is a schematic cross-section showing another example of a layer configuration of the needle puncture detection sheet of the present invention.
FIG. 9 is a schematic cross-section showing another example of a layer configuration of the needle puncture detection sheet of the present invention.
FIG. 10 is a schematic cross-section showing another example of a layer configuration of the needle puncture detection sheet of the present invention.
FIG. 11 is a schematic cross-section showing another example of a layer configuration of the needle puncture detection sheet of the present invention.
FIG. 12 is a schematic cross-section showing another example of a layer configuration of the needle puncture detection sheet of the present invention.
FIG. 13 is a schematic cross-section showing another example of a layer configuration of the needle puncture detection sheet of the present invention.
FIG. 14 is a schematic cross-section showing another example of a layer configuration of the needle puncture detection sheet of the present invention.
FIG. 15 is a schematic cross-section showing another example of a layer configuration of the needle puncture detection sheet of the present invention.
FIG. 16 is a schematic cross-section showing another example of a layer configuration of the needle puncture detection sheet of the present invention.
FIG. 17 is a schematic cross-section showing another example of a layer configuration of the needle puncture detection sheet of the present invention.
FIG. 18 is a schematic cross-section showing another example of a layer configuration of the needle puncture detection sheet of the present invention.
FIG. 19 is a schematic cross-section showing another example of a layer configuration of the needle puncture detection sheet of the present invention.
FIG. 20 is a schematic cross-section showing another example of a layer configuration of the needle puncture detection sheet of the present invention.
FIG. 21 is a schematic cross-section showing another example of a layer configuration of the needle puncture detection sheet of the present invention.
FIG. 22 is a schematic cross-section showing another example of a layer configuration of the needle puncture detection sheet of the present invention.
FIG. 23 is a schematic cross-section showing another example of a layer configuration of the needle puncture detection sheet of the present invention.
FIG. 24 is a schematic cross-section showing another example of a layer configuration of the needle puncture detection sheet of the present invention.
FIG. 25 is a schematic perspective diagram showing the form of an evaluation test sample used in the Examples.

### DESCRIPTION OF EMBODIMENTS

### <Needle puncture detection sheet>

The needle puncture detection sheet of the present invention has a whitening resin layer, wherein the whitening resin layer is a resin layer that, when a puncture hole is formed by inserting an RB type injection needle having a diameter of 0.80 mm, whitens to a width of 0.2 mm or more around the puncture hole. The "RB" of RB type injection needle is an abbreviation of "Regular Bevel", which means the blade surface is the usual length, and the angle of the needle tip is about 12°.

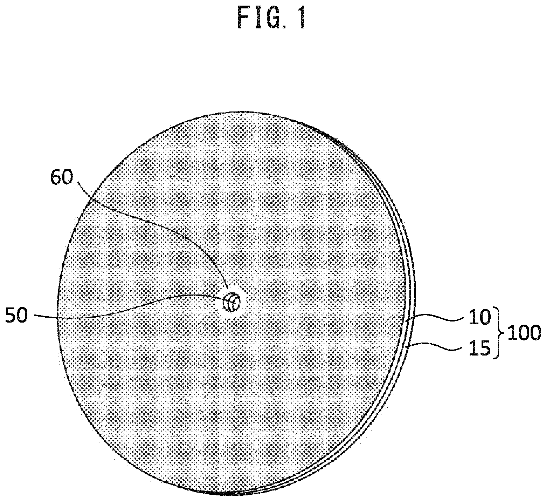

FIG. 1 is a schematic perspective view showing via model the state in which a needle has been inserted into the needle puncture detection sheet of the present invention, forming a puncture hole.

The needle puncture detection sheet (100) of FIG. 1 has a whitening resin layer (10) and an auxiliary layer (15). In the needle puncture detection sheet of the present invention, the auxiliary layer (15) is optional. The auxiliary layer (15) can be a single layer or consist of 2 or more layers.

The whitening resin layer (10) of the needle puncture detection sheet (100) of FIG. 1 has a characteristic that when a puncture hole is formed by inserting an RB type injection needle having a diameter of 0.80 mm, the whitening resin layer whitens to a width of 0.2 mm or more around the puncture hole.

When a needle is inserted into the needle puncture detection sheet (100) of FIG. 1 having this whitening resin layer (10) and a puncture hole (50) is formed therein, the area of the whitening resin layer (10) around the puncture hole (50) whitens, forming a whitened region (60). Thus, the puncture hole (50) provides an observable mark visually emphasizing the puncture hole (50) in the form of the surrounding whitened region (60). Thus, a user of the needle puncture detection sheet (100) of FIG. 1 can easily and accurately assess whether a needle has been inserted or not.

The needle puncture detection sheet of the present invention can have, in addition to the whitening resin layer, one or more layers selected from a reinforcement layer, a sealant layer, an adhesive layer, a colored resin layer, and a partially colored resin layer as the auxiliary layer. Regarding the sealant layer and adhesive layer, either one of the layers can be used, or both of the layers can be used.

The layers in the needle puncture detection sheet of the present invention will be described below.

### <Whitening resin layer>

The whitening resin layer of the needle puncture detection sheet of the present invention has a characteristic that when a puncture hole is formed by inserting an RB type injection needle having a diameter of 0.80 mm, the whitening resin layer whitens to a width of 0.2 mm or more around the puncture hole.

This whitening characteristic of the whitening resin layer is thought to be due to the phenomenon of whitening when the resin undergoes plastic deformation. Without being bound to theory, the whitening that accompanies plastic deformation of the resin is thought to be due to the formation of a craze structure in the resin and the formation of gaps due to the interposition of filler in the resin.

The resin sometimes forms a craze structure, for example, when plastically deformed by bending. The craze structure is a structure consisting of oriented chains in which molecular chains of the resin are stretched and oriented in the direction of the main stress during plastic deformation, and tiny voids which emerge together with the orientation of the molecular chains. The portion in which the craze structure is formed scatters light and therefore appears white.

When a needle punctures a resin in the form of a layer, molecular chains are stretched in the needle puncture direction as the direction of the main stress, such that a craze structure consisting of oriented chains and tiny voids can be formed.

In the case of a filler-containing resin comprising a filler in the resin matrix, if, for example, the resin is bent, the resin matrix undergoes plastic deformation, but the filler does not deform, thereby resulting in different displacements for the resin matrix and the filler such that they separate and gaps are sometimes formed at their boundaries. The gaps of the filler-containing resin scatter light and therefore appear white.

When a needle punctures the layer of filler-containing resin, molecular chains are stretched in the needle puncture direction as the direction of the main stress, and the resin undergoes plastic deformation, such that gaps can form between the resin matrix and the filler.

It is considered that, when the whitening resin layer is punctured by a needle, thereby forming a puncture hole, the area around the puncture hole whitens due to this kind of mechanism.

In any of the cases above, from the perspective of sufficiently raising visibility of the puncture hole, the width of the whitened region around the puncture hole when a puncture hole has been formed in the whitening resin layer by inserting an RB type injection needle having a diameter of 0.80 mm is 0.2 mm or more, 0.3 mm or more, 0.4 mm or more, or 0.5 mm or more. From the perspective of raising visibility, the width of the whitened region around the puncture hole is 1.0 mm or less, 0.9 mm or less, 0.8 mm or less, 0.7 mm or less or 0.6 mm or less.

The whitening resin layer can have a characteristic such that the area around the puncture hole whitens even when the diameter of the injection needle forming the puncture hole is, for example, 0.6 mm or 0.4 mm. In such cases, the width of the whitened region around the puncture hole can be, for example, 0.2 mm or more, 0.3 mm or more, 0.4 mm or more, or 0.5 mm or more, and, for example, 1.0 mm or less, 0.9 mm or less, 0.8 mm or less, 0.7 mm or less, or 0.6 mm or less.

As long as the whitening resin layer has the above whitening characteristics, the configuration thereof is not limited. However, the whitening resin layer can be, for example, a layer of resin having a sea island-type microphase separation structure composed of a continuous phase comprising a hard segment and a dispersed phase comprising a soft segment (hereinafter referred to as "sea island-type whitening resin layer"), or a layer of resin containing a filler (hereinafter referred to as "filler-containing whitening resin layer").

When the whitening resin layer is a sea island-type whitening resin layer, the hard segment can be one or more selected from, for example, polystyrene, crystalline polyolefin, acrylonitrile-styrene copolymer, crystalline polydiene, crystalline polyvinyl chloride, polyurethane, and polyamide. The crystalline polyolefin can be, for example, polypropylene, or high density polyethylene. The crystalline polydiene can be, for example, syndiotactic 1,2-polybutadiene, or trans-1,4-polyisoprene.

The hard segment can comprise one or more selected from the group consisting of polystyrene, crystalline polyolefin, and acrylonitrile-styrene copolymer.

The soft segment can be one or more selected from, for example, amorphous polyolefin, amorphous polydiene rubber, amorphous polyvinyl chloride, polyester, and polyether. The amorphous polyolefin can be, for example, low density polyethylene, chain low density polyethylene, ethylene-propylene rubber, ethylene-propylene-diene rubber, hydrogenated butadiene rubber, or hydrogenated isoprene rubber. The amorphous polydiene rubber can be, for example, butadiene rubber, isoprene rubber, or styrene-butadiene rubber.

The soft segment can comprise one or more selected from the group consisting of butadiene rubber, styrene-butadiene rubber, and amorphous polyolefin.

The resin constituting the sea island-type whitening resin layer can be a copolymer in which the hard segment and soft segment are bonded by covalent bonds, or can be a blend in which separate high polymer molecules of the hard segment and the soft segment are present. The resin can additionally comprise a compatibilizer for controlling the interfacial tension between the continuous phase comprising the hard segment and the dispersed phase comprising the soft segment and adjusting the particle size of the dispersed phase. The compatibilizer can be, for example, a block copolymer or a graft copolymer consisting of a block having the same polymer chains as the resin constituting the hard segment, and a block having the same polymer chains as the resin constituting the soft segment.

The sea island-type whitening resin layer can be a layer of resin of one or more selected from the group consisting of high impact polystyrene (HIPS), block copolymer-type polypropylene (block PP), and acrylonitrile butadiene-styrene copolymer (ABS).

HIPS can have a configuration having a dispersed layer comprising one or more selected from amorphous polydiene and amorphous polyolefin as the soft segment in the continuous phase comprising polystyrene as the hard segment. Block PP can have a configuration having a dispersed layer comprising amorphous polyethylene as the soft segment in the continuous phase comprising polypropylene as the hard segment, and ethylene-propylene rubber as a compatibilizer at the interface of the continuous phase and the dispersed phase. ABS can have a configuration having a dispersed layer comprising one or more selected from butadiene rubber and styrene-butadiene rubber as the soft segment in the continuous phase comprising acrylonitrile-styrene copolymer as the hard segment.

If block PP is used as the whitening resin layer, the heat resistance (heat resistant shape maintenance) of the obtained needle puncture detection sheet will be high, making the sheet suitable for uses in medicine and foods where sterilization is performed by boiling or using high temperatures.

The reason for the higher heat resistance when using a block PP is considered by the inventors to be related to the glass transition temperature Tg or the melting point mp of the resin or both. That is, the Tg of the block PP appears at about 0 °C, and the mp of the block PP appears at about 150 to 160 °C. Therefore, the block PP does not undergo a phase transition at temperatures of about 100 to 130 °C, which are common temperatures for sterilization in medicine and food products, and thus, the heat resistance of the needle puncture detection sheet using the block PP as a whitening resin layer is improved. The present invention is not bound by theory.

When the whitening resin layer is a filler-containing whitening resin layer, the layer can have a structure in which the filler is dispersed in the matrix of the resin.

The resin comprising the matrix of filler-containing whitening resin layer can be a thermoplastic resin, and specifically, can be low-density polyethylene (LDPE), linear low-density polyethylene (LLDPE), medium-density polyethylene, high-density polyethylene (HDPE), metallocene-catalyzed polyethylene, propylene homopolymer, propylene-ethylene block copolymer, propylene-ethylene random copolymer polymer, metallocene-catalyzed polypropylene, chlorinated polypropylene, polymethylpentene, saturated polyester, ethylene-acrylic acid copolymer (EAA), ethylene-methacrylic acid copolymer (EMAA), ethylene-ethyl acrylate copolymer (EEA), ethylene-methyl acrylate copolymer (EMAC), ethylene-vinyl acetate copolymer (EVA), ionomer, carboxylic acid-modified polyethylene, carboxylic acid-modified polypropylene, carboxylic acid-modified EVA, polyvinyl chloride (PVC), polystyrene, polycarbonate, polyamide, thermoplastic elastomer, or a combination of 2 or more of the above.

The filler can be a substance that does not disrupt the transparency of the resin, and has a function of whitening the whitening resin layer. The filler can be, specifically, molecular sieve (hydrophilic zeolite) 3A, 4A, 5A, or 13X, or silica or porous silica, or a combination of two or more of the above. Of these, molecular sieves become transparent when they absorb water, such that they are suitable for use in medicine and food products where retort sterilization is carried out by boiling or high temperature steam.

The filler can be in particulate form, and the particle diameter can be 10 µm or less.

The ratio of filler in the filler-containing whitening resin layer can be, for example, with reference to the entire mass of the whitening resin layer, for example, 1 mass% or more, 5 mass% or more, 10 mass% or more, or 15 mass% or more, and, for example, 70 mass% or less, 60 mass% or less, 50 mass% or less, or 40 mass% or less.

Regarding both the sea island-type whitening resin layer and the filler-containing whitening resin layer, the whitening resin layer can be colored or not colored.

If the whitening resin layer is colored, the whitened region around the punctured hole formed when a needle is inserted can be made more visually apparent, raising the visibility of the puncture hole. Additionally, the color of the whitening resin layer can be used as an indicator for discriminating based on the contents of the container.

If the whitening resin layer is colored, the color can be any color. However, from the perspective of making the whitened region around the puncture hole visually apparent, the whitening resin layer can be colored a dark color. The dark color can be, for example, black, dark gray, blue, red, green, purple, brown, navy, or orange.

If the whitening resin layer is colored, just the surface of the whitening resin layer can be colored, or the inside of the whitening resin layer can be colored. The surface of the whitening resin layer colored on the inside can be additionally colored with the same color or a different color.

The L value of the colored whitening resin layer can be, for example, 80 or less, in particular, 75 or less, 70 or less, 60 or less, 50 or less, 40 or less, or 30 or less. This L value refers to the lightness L* when the color of the whitening resin layer is expressed in coordinates of the "CIE L*a*b* (CIELAB) color space" formulated by CIE (Commission Internationale de l'Eclairage). This L value expressed darker colors at lower values, such that pure black has an L value of 0, and white diffuse light has an L value of 100. The L value is measured using a commercially-available photoelectric colorimeter and a D50 light source at an observation viewing angle of 2° according to a method pursuant with JIS Z8722.

In order to impart the proper amount of processability, the thickness of the whitening resin layer can be, for example, 30 µm or more, 40 µm or more, 50 µm or more, 60 µm or more, 70 µm or more, or 80 µm or more, and, for example, 200 µm or less, 180 µm or less, 160 µm or less, 140 µm or less, or 120 µm or less.

### <Reinforcement layer>

The needle puncture detection sheet of the present invention can additionally have a reinforcement layer on one side or both sides of the whitening resin layer. The reinforcement layer can be on one side or both sides of the whitening resin layer. The reinforcement layer has a function of suppressing the formation of white thread-like marks in the whitening resin layer when the needle puncture detection sheet is scraped or bent during manufacture or storage of the needle puncture detection sheet or a container using the sheet. Therefore, the reinforcement layer, unlike the whitening resin layer, can be a layer composed of a material that does not whiten when pierced with a needle.

As long as the above functions can be performed, the material composing the reinforcement layer can be any material. However, in order to maintain ease of processing and handling, a thermoplastic resin can be used; in particular, a thermoplastic resin having flexibility is suitable. As stated above, the reinforcement layer does not need to whiten when pierced by a needle, and therefore, the thermoplastic resin composing the reinforcement layer can be a thermoplastic resin that does not whiten when pierced by a needle.

Therefore, it is preferable than the thermoplastic resin composing the reinforcement layer not use a thermoplastic resin having a sea island-type microphase separation structure composed of a continuous phase comprising a hard segment and a dispersed phase comprising a soft segment, or a thermoplastic resin comprising a filler.

The thermoplastic resin used as the material in the reinforcement layer can be, for example, polyethylene, polypropylene, polyester, acrylic resin, olefin-acrylic monomer copolymer, or other organic polymer. The polyethylene can be, for example, linear low density polyethylene (LLDPE), low density polyethylene (LDPE), medium density polyethylene (MDPE), or high density polyethylene (HDPE). The polypropylene can be, for example, random polypropylene, or homopolypropylene. The polyester can be, for example, polyethylene terephthalate (PET). The acrylic resin can be, for example, polymethyl methacrylate. The olefin-acrylic monomer copolymer can be, for example, ethylene-methylacrylate copolymer (EMAC), or ethylene-methyl methacrylate copolymer (EMMA). The other organic polymer can be, for example, polyvinylchloride, ethylene-vinyl acetate copolymer (EVA), or elastomer.

If an olefin-acrylic monomer copolymer is used as the material for the reinforcement layer, when a needle is inserted into the needle puncture detection sheet and a puncture hole forms, not only does the region around the puncture hole of the whitening resin layer whiten, but cracks emerge radially from the puncture hole in the reinforcement layer, which is preferable from the perspective of improving visibility of the puncture hole.

However, if polyethylene, polypropylene, or polyester is used as the material for the reinforcement layer, the heat resistance (heat-resistant shape retention) of the needle puncture detection sheet increases, which is preferable.

In order to impart the proper amount of processability, the thickness of the reinforcement layer can be, for example, 1 µm or more, 3 µm or more, 5 µm or more, 10 µm or more, 15 µm or more, 20 µm or more, 25 µm or more, or 30 µm or more, and, for example, 200 µm or less, 180 µm or less, 160 µm or less, 140 µm or less, 120 µm or less, or 100 µm or less.

### <Sealant layer>

The sealant layer which can be optionally used in the needle puncture detection sheet of the present invention can adhere the needle puncture detection sheet to the cap of, for example, an infusion bag and protect the cap during storage of the infusion bag. Additionally, in the case that the sealant layer is easy-to-peel, it can make the needle puncture detection sheet easy to remove when using the infusion bag. The adhesion of the sealant layer and the cap of the needle puncture detection sheet can be, for example, heat fusion.

The sealant layer can be, for example, a thermoplastic resin layer, and can be a single layer, or a laminate composed of a plurality of layers.

The thermoplastic resin composing the sealant layer can be one or more selected from, for example, polyethylene, polypropylene, polyvinylchloride, ethylene-methacrylic acid copolymer, ethylene-vinyl acetate copolymer, and ethylene-methyl acrylate copolymer.

The sealant layer can be colored, or not colored.

If the sealant layer is colored, much like the case when the whitening resin layer is colored, the whitened region around the puncture hole formed when a needle is inserted is made more visually apparent, such that the visibility of the puncture hole can be increased.

If the sealant layer is colored, from the perspective of making the whitened region around the puncture hole in the whitening resin layer when pierced with a needle visually apparent, the sealant layer can be colored a dark color, such as black, dark gray, blue, red, green, purple, brown, navy, or orange. If the sealant layer is colored, just the surface of the sealant layer can be colored, or the inside of the sealant layer can be colored. The surface of the sealant layer colored on the inside can be additionally colored with the same color or a different color.

The L value of the colored sealant layer can be, for example, 80 or less, 75 or less, 70 or less, 60 or less, 50 or less, 40 or less, or 30 or less.

In order to impart the proper amount of processability, the thickness of the sealant layer can be, for example, 30 µm or more, 40 µm or more, 50 µm or more, 60 µm or more, 70 µm or more, or 80 µm or more, and, for example, 200 µm or less, 180 µm or less, 160 µm or less, 140 µm or less, or 120 µm or less.

The sealant layer of the needle puncture detection sheet of the present invention can be a product commercially available under the name "Easy Peel Film" or "Easy Open Film". The commercially available product can be, for example, CMPS, T.A.F made by Mitsui Chemicals Tohcello Inc.; DIFAREN made by DIC Corporation; Sholex made by Okamoto Inc.; or Torayfan by Toray Advanced Film Co., Ltd.

### <Adhesive layer>

The adhesive layer which can be optionally used in the needle puncture detection sheet of the present invention can adhere the needle puncture detection sheet to the cap of, for example, an infusion bag and protect the cap during storage of the infusion bag. Additionally, this adhesive layer can make the needle puncture detection sheet easy to remove when using the infusion bag.

The adhesive layer can be a layer of one or more adhesive selected from, for example, a rubber-based adhesive, an acrylic-based adhesive, a silicone-based adhesive, and a urethane-based adhesive. These adhesives can optionally comprise, for example, a tackifier, a crosslinker, a softener, and a filler. The tackifier can be, for example, phenolic resin, terpene resin, rosin resin, or xylene resin.

The adhesive layer can be colored, or not colored. If the adhesive layer is colored, the adhesive layer can be colored a dark color, such as black, dark gray, blue, red, green, purple, brown, navy, or orange.

The L value of the colored adhesive layer can be, for example, 80 or less, 75 or less, 70 or less, 60 or less, 50 or less, 40 or less, or 30 or less.

The thickness of the adhesive layer can be, for example, 1.0 µm or more, 1.5 µm or more, 2.0 µm or more, or 2.5 µm or more, and, for example, 3.0 µm or less, 2.5 µm or less, or 2.0 µm or less.

### <Colored resin layer>

The adhesive layer which can be optionally used in the needle puncture detection sheet of the present invention has a function of making the whitened region around the punctured hole formed when a needle is inserted into the needle puncture detection sheet of the present invention visually apparent.

The color of the colored resin layer can be any color. However, from the perspective of effectively utilizing the function of the colored resin layer of making the whitened region around the puncture hole of the whitening resin layer when a needle has been inserted therethrough visually apparent, the colored resin layer can be colored a dark color, such as black, dark gray, blue, red, green, purple, brown, navy, or orange.

If the colored resin layer is colored, just the surface of the colored resin layer can be colored, or the inside of the colored resin layer can be colored. The surface of the colored resin layer colored on the inside can be additionally colored with the same color or a different color.

The L-value of the colored resin layer can be, for example, 80 or less, 75 or less, 70 or less, 60 or less, 50 or less, 40 or less, or 30 or less.

The colored resin layer can be, for example, a thermoplastic resin layer. The thermoplastic resin can be, for example, polyethylene, polypropylene, polyester, or polyamide. The polyethylene can be, for example, low density polyethylene, chain low density polyethylene, medium density polyethylene, or high density polyethylene. The polypropylene can be, for example, a homopolymer, or a random or block copolymer. The colored resin layer can be a thermoplastic resin film commercially available under the name "Color Film", and the thermoplastic resin layer can be colored. Coloring of the thermoplastic resin layer can be carried out appropriately by printing, such as flexographic printing, gravure printing, offset printing, or screen printing.

In order to impart the proper amount of processability, the thickness of the colored resin layer can be, for example, 1 µm or more, 5 µm or more, 10 µm or more, 20 µm or more, or 50 µm or more, and, for example, 200 µm or less, 180 µm or less, 160 µm or less, 140 µm or less, or 120 µm or less.

### <Partially colored resin layer>

The partially colored resin layer which can be optionally used in the needle puncture detection sheet of the present invention has a colored region and a non-colored region. This portion of the colored resin layer has a function of making the whitening characteristics of the whitening resin layer prominent in the non-colored region while making the whitening along bend lines when the needle puncture detection sheet bends less prominent in the colored region.

The whitening resin layer in the needle puncture detection sheet of the present invention has the characteristic of whitening due to plastic deformation such as punctures and bending. However, in regions of the needle puncture detection sheet where needle insertion is not expected, there is no need to detect whether a needle has been inserted, and no need to make the whitening characteristics prominent. If a partially colored resin layer is provided in the needle puncture detection sheet of the present invention, the whitening of the whitening resin layer in the colored region can be made less prominent. Therefore, by providing the partially colored resin layer in the needle puncture detection sheet of the present invention such that the non-colored region coincides with the region in which needle insertion is expected, and the colored region coincides with the region in which needle insertion is not expected, then both the detection of whether a needle has been inserted in the region in which needle insertion is expected and the appearance of the region in which needle insertion is not expected can be maintained.

From the perspective of making the whitening due to bending less prominent, the colored region of the partially colored resin layer can be a bright color, with an L value of 75 or more, more than 75, or 80 or more. The colored region can be opaque or have transparency, but if provided on the outer side (opposite side of the container side) of the whitening resin layer, from the perspective of making the whitening due to bending less prominent, the colored region can be opaque.

The partially colored resin layer can be, for example, a partly colored thermoplastic resin layer. The thermoplastic resin polyethylene, polypropylene, polyester, or polyamide. Partial coloring of the thermoplastic resin layer can be carried out appropriately by printing, such as flexographic printing, gravure printing, offset printing, or screen printing. The thickness of the partially colored resin layer can be 1 µm to 200 µm, and this range can be appropriately adjusted.

### <Application and configuration of the needle puncture detection sheet>

The needle puncture detection sheet of the present invention can be used in, for example, a lid material, and is particularly useful a lid material for containers holding liquid medicine.

The needle puncture detection sheet having a whitening resin layer but not having a sealant layer or adhesive layer can be used as the "abdomen" of the infusion caps described in PTL 1 (Japanese Unexamined Patent Publication (Kokai) No. 2011-78810) and PTL 2 (Japanese Registered Patent No. 4904501).

The needle puncture detection sheet having a whitening resin layer and a sealant layer, wherein this sealant layer is peelable, can be used as a peelable material in, for example, an infusion bag. If using this type of needle puncture detection sheet as a peelable material in an infusion bag, the needle puncture detection sheet can be used by applying to the cap of the infusion bag via the sealant layer. The method for applying the needle puncture detection sheet on the infusion bag cap can be, for example, heat sealing.

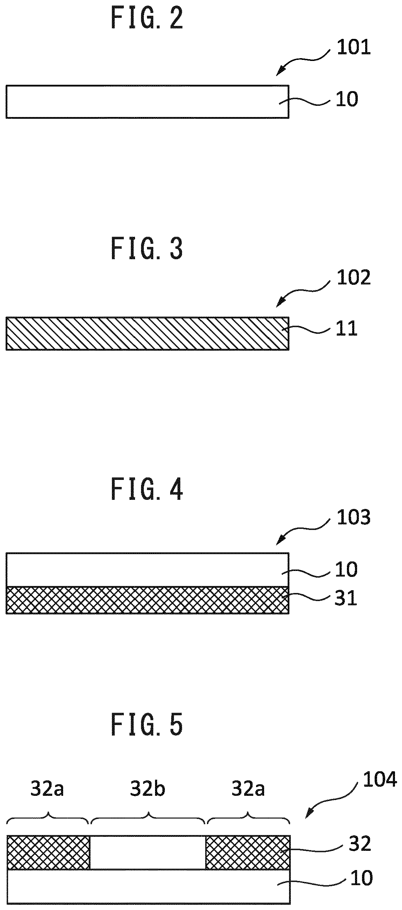

Examples of configurations of a needle puncture detection sheet of the present invention are shown respectively as schematic cross-sections in FIGS. 2 to 24.

Examples of configurations of a needle puncture detection sheet having a whitening resin layer but not having a sealant layer or an adhesive layer are shown in FIGS. 2 to 6.

The needle puncture detection sheet (101) of FIG. 2 is composed of whitening resin layer (10).

The needle puncture detection sheet of this aspect can be composed of a colored whitening resin layer (11) as in the needle puncture detection sheet (102) shown in FIG. 3, or can be a laminate in which both the whitening resin layer (10) and the colored resin layer (31) are laminated as in the needle puncture detection sheet (103) shown in FIG. 4. The needle puncture detection sheet (103) of FIG. 4 can be used with the whitening resin layer (10) facing the outer side, and the colored resin layer (31) facing the container side.

The needle puncture detection sheet (104) of FIG. 5 can be a laminate in which both the whitening resin layer (10) and the partially colored resin layer (32) are laminated. The needle puncture detection sheet (104) can be used with the partially colored resin layer (32) facing the outer side, and the whitening resin layer (10) facing the container side. The partially colored resin layer (32) of the needle puncture detection sheet (104) can be opaque.

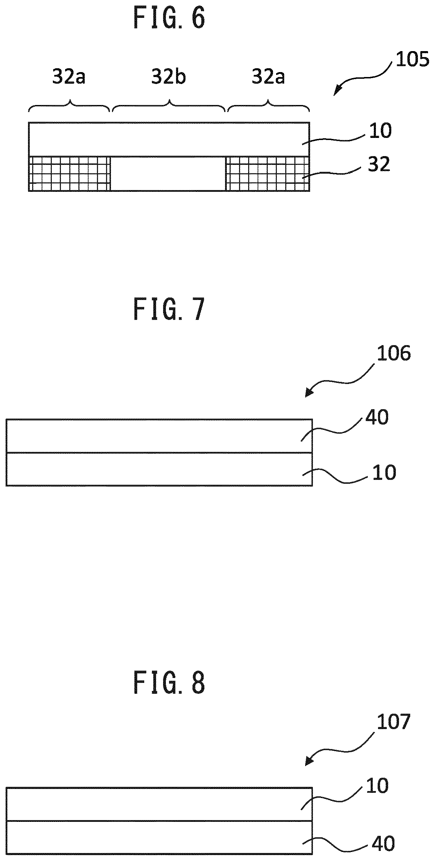

The needle puncture detection sheet (105) of FIG. 6 can be a laminate in which both the whitening resin layer (10) and the partially colored resin layer (32) are laminated. The needle puncture detection sheet (105) can be used with the whitening resin layer (10) facing the outer side, and the partially colored resin layer (32) facing the container side. The partially colored resin layer (32) of the needle puncture detection sheet (105) can be opaque or can have transparency.

The portions of colored resin layer (32) of the needle puncture detection sheet (104) of FIG. 5 and the needle puncture detection sheet (105) of FIG. 6 each have a colored region (32a) and a non-colored region (32b). In this case, the colored region (32a) has excellent ability to maintain the appearance of the region because the whitening of the whitening resin layer (10) when bent. The non-colored region (32b) has excellent detection of whether a needle has been inserted because the whitening characteristics of the whitening resin layer (10) are made prominent.

The needle puncture detection sheet of the present invention can have a whitening resin layer and a reinforcement layer on one side or both sides of the whitening resin layer. In the following explanation, each layer is described in the order from the lid outer layer towards the container when the needle puncture detection sheet of the present invention is applied as a lid material of a container.

Examples of configurations of a needle puncture detection sheet having a whitening resin layer and a reinforcement layer, but not having a sealant layer or an adhesive layer, are shown in FIGS. 7 to 9.

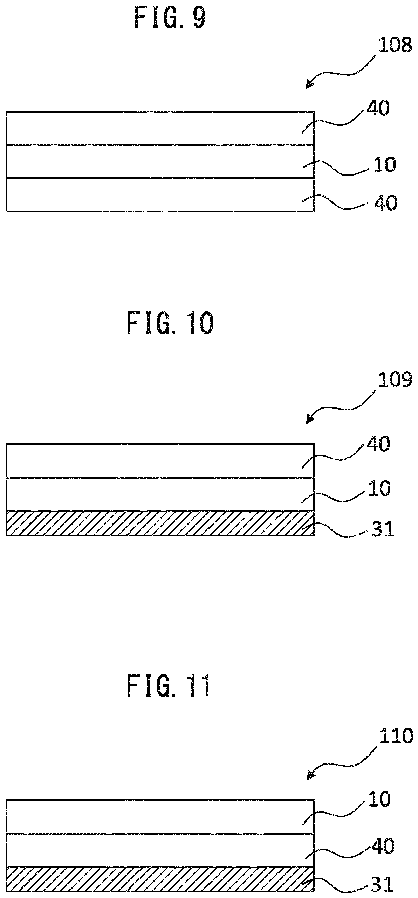

The needle puncture detection sheet of this aspect can, as in the needle puncture detection sheet (106) shown in FIG. 7, have a reinforcement layer (40) and a whitening resin layer (10) in this order from the outer side of the lid towards the container; or, as in the needle puncture detection sheet (107) shown in FIG. 8, have a whitening resin layer (10) and a reinforcement layer (40) in this order from the outer side of the lid towards the container; or, as in the needle puncture detection sheet (108) shown in FIG. 9, have a reinforcement layer (40), a whitening resin layer (10), and a reinforcement layer (40) in this order from the outer side of the lid towards the container.

The needle puncture detection sheet having a whitening resin layer and a reinforcement layer can have a colored resin layer in addition to these layers. The colored resin layer is for making the puncture hole visually apparent by increasing the contrast between the whitened region formed around the puncture hole when a needle is inserted and other regions of the whitening resin layer. Therefore, it is effective to arrange the colored resin layer towards the container side relative to the whitening resin layer.

Examples of configurations of a needle puncture detection sheet having a whitening resin layer and a reinforcement layer, but not having a sealant layer or an adhesive layer are shown in FIGS. 10 to 12.

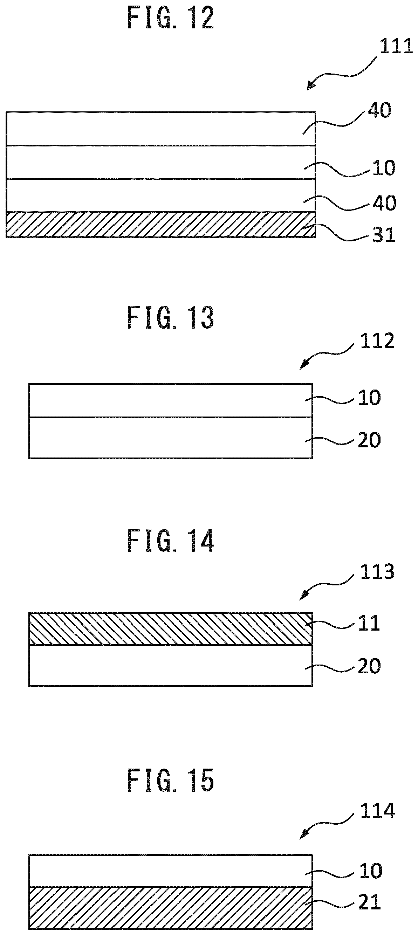

The needle puncture detection sheet of this aspect can, as in the needle puncture detection sheet (109) shown in FIG. 10, have a reinforcement layer (40), a whitening resin layer (10), and a colored resin layer (31) in this order; or, as in the needle puncture detection sheet (110) shown in FIG. 11, have a whitening resin layer (10), a reinforcement layer (40), and a colored resin layer (31) in this order; or, as in the needle puncture detection sheet (111) shown in FIG. 12, have a reinforcement layer (40), a whitening resin layer (10), a reinforcement layer (40), and a colored resin layer (31) in this order.

Examples of configurations of a needle puncture detection sheet having a whitening resin layer and a sealant layer are shown as schematic cross-sections in FIGS. 13 to 18.

The needle puncture detection sheet (112) of FIG. 13 has a whitening resin layer (10) and a sealant layer (20), and is composed of a laminate in which both layers are laminated.

The needle puncture detection sheet having a whitening resin layer and a sealant layer can, as in the needle puncture detection sheet (113) shown in FIG. 14, have a colored whitening resin layer (11) and a non-colored sealant layer (20), and be composed of a laminate in which both layers are laminated, or, as in the needle puncture detection sheet (114) shown in FIG. 15, have a non-colored whitening resin layer (10) and a colored sealant layer (21), and be composed of a laminate in which both layers are laminated.

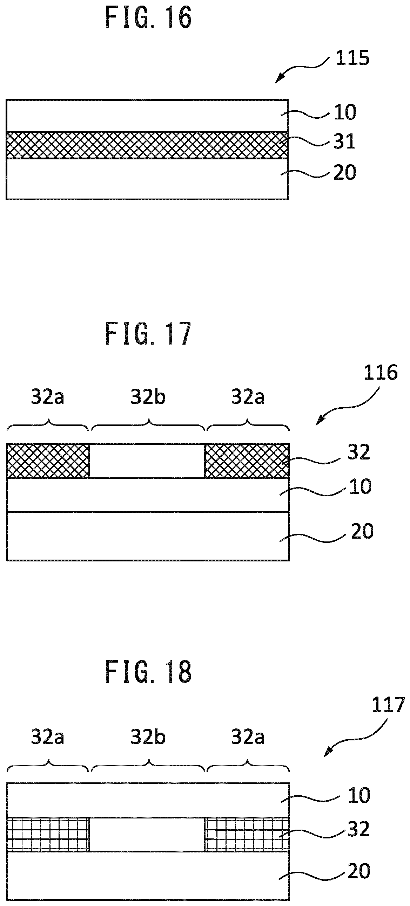

The needle puncture detection sheet having a whitening resin layer and a sealant layer can additionally have a colored resin layer, and can be a laminate in which the whitening resin layer, the colored resin layer and the sealant layer are laminated in that order. Specifically, as in the needle puncture detection sheet (115) shown in FIG. 16, the needle puncture detection sheet can be a laminate in which a non-colored whitening resin layer (10), a colored resin layer (31), and a non-colored sealant layer (20) are laminated in this order.

The needle puncture detection sheet having a whitening resin layer and a sealant layer can additionally have a partially colored resin layer. For example, as in the needle puncture detection sheet (116) shown in FIG. 17, the needle puncture detection sheet can be a laminate in which the partially colored resin layer (32), the whitening resin layer (10) and the sealant layer (20) are laminated in this order. Alternatively, as in the needle puncture detection sheet (117) shown in the FIG. 18, the needle puncture detection sheet can be a laminate in which the whitening resin layer (10), partially colored resin layer (32), and the sealant layer (20) are laminated in this order.

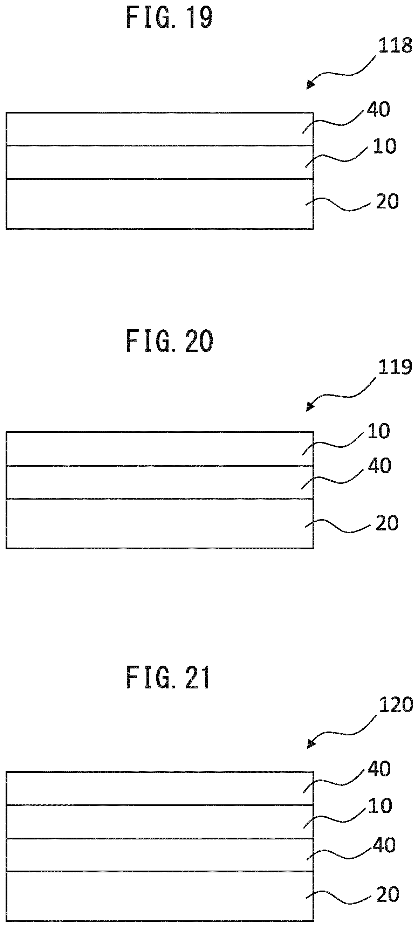

Examples of configurations of a needle puncture detection sheet having a reinforcement layer in addition to a whitening resin layer and a sealant layer are shown in FIGS. 19 to 21. In the following explanation, each layer is described in the order from the lid outer layer towards the container when the needle puncture detection sheet of the present invention is applied as a lid material of a container.

The needle puncture detection sheet of this aspect can, as in the needle puncture detection sheet (118) shown in FIG. 19, have a reinforcement layer (40), a whitening resin layer (10), and a sealant layer (20) in this order; or, as in the needle puncture detection sheet (119) shown in FIG. 20, have a whitening resin layer (10), a reinforcement layer (40), and a sealant layer (20) in this order; or, as in the needle puncture detection sheet (120) shown in FIG. 21, have a reinforcement layer (40), a whitening resin layer (10), a reinforcement layer (40), and a sealant layer (20) in this order.

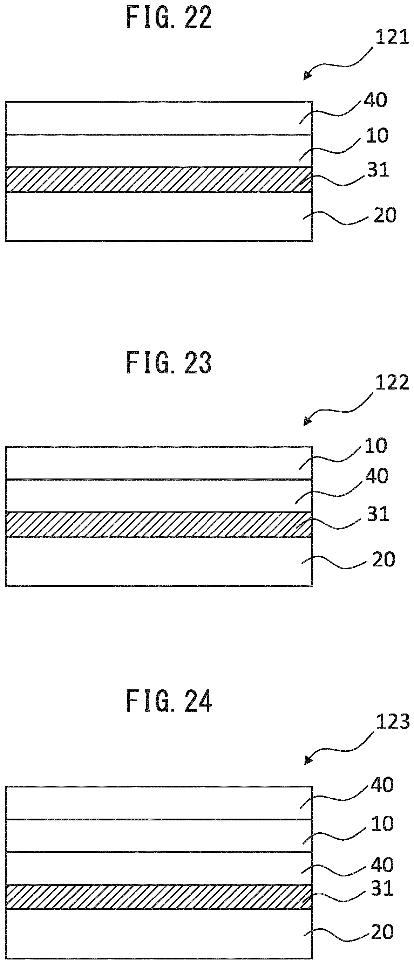

Examples of configurations of a needle puncture detection sheet having a reinforcement layer and colored resin layer in addition to a whitening resin layer and a sealant layer are shown in FIGS. 22 to 24. In the following explanation, each layer is described in the order from the lid outer layer towards the container when the needle puncture detection sheet of the present invention is applied as a lid material of a container.

The needle puncture detection sheet of this aspect can, as in the needle puncture detection sheet (121) shown in FIG. 22, have a reinforcement layer (40), a whitening resin layer (10), a colored resin layer (31), and a sealant layer (20) in this order; or, as in the needle puncture detection sheet (122) shown in FIG. 23, have a whitening resin layer (10), a reinforcement layer (40), a colored resin layer (31), and a sealant layer (20) in this order; or, as in the needle puncture detection sheet (123) shown in FIG. 24, have a reinforcement layer (40), a whitening resin layer (10), a reinforcement layer (40), a colored resin layer (31), and a sealant layer (20) in this order.

Needle puncture detection sheets having an adhesive layer in place of or in addition to a sealant layer (20, 21) in the need puncture detection sheets (112 to 123) of FIGS. 13 to 24 are encompassed by the needle puncture detection sheet of the present invention.

### <Lidded container of liquid medicine>

The lidded container of liquid medicine of the present invention has a container having an opening part, a liquid medicine stored in the container, a stopper that seals the opening part of the container, and a lid material covering the stopper, wherein the lid material is the needle puncture detection sheet of the present invention.

The container can be, for example, glass, or synthetic resin, and can be appropriately selected in accordance with the properties of the liquid medicine stored therein.

The stopper can be composed of a material which can seal the opening part of the container and can be pierced and penetrated by a needle, in particular, an injection needle, for example, a rubber stopper.

The form of the lid material of the lidded container of liquid medicine can be, for example, a peelable material.

### <<Method of manufacture for the needle puncture detection sheet>>

The needle puncture detection sheet of the present invention can be manufactured by forming raw material resin as a film or by laminating as necessary.

Forming raw material resin as a film can be carried out by appropriate methods such as extrusion molding (T-die method, inflation method), calendar molding, compression molding, or injection molding. Of these, extrusion molding is preferable, and in particular, an extrusion inflation method or an extrusion T-die method can be employed.

If the needle puncture detection sheet is a laminate having a whitening resin layer and an auxiliary layer, laminating each layer can be carried out by a method of fusing between each layer using a hot roller or a hot press, a method using an adhesive such as a hot melt adhesive, a dry lamination method, an extrusion lamination method or a co-extrusion method. Of these, a co-extrusion method is preferable, and in particular, a co-extrusion inflation method or a co-extrusion T-die method can be employed.

As described above, each layer of the needle puncture detection sheet of the present invention can be colored on just the surface or can be colored on the inside, and the surface of a layer colored on the inside can be additionally colored with the same color or a different color.

A layer in which the surface is colored can be prepared by, for example, forming the raw material resin into a film, and thereafter printing or coating the film surface with a suitable ink. A layer in which the inside is colored can be prepared by, for example, kneading, for example, a coloring agent such as a pigment, a dye, or an ink, or a color master batch comprising one or more of the same into the raw material resin and thereafter forming into a film.

A commercially available film can be used as is or, if necessary, colored as each of the layers in the needle puncture detection sheet of the present invention.

### EXAMPLES

### <Example 1>

### (Creating the needle puncture detection sheet)

Pellets of high impact polystyrene (HIPS) (Toyo Styrene Co., Ltd., product name "Toyo Styrene HI H700 natural color") were hot pressed to prepare a film 100 µm in thickness, which was used as the whitening resin layer.

An easy-to-peel film (Mitsui Chemicals Tohcello, Inc., product name "CMPS 013C#30") was applied as a sealant layer to this whitening resin layer via an adhesive to prepare a needle puncture detection sheet (peelable material) having a configuration of a whitening resin layer / sealant layer.

### (Evaluation of puncture hole visibility)

An injection needle (Terumo Corporation, product name "NN-2138R", gauge 21 G (0.80 mm), needle length 1+1/2 inch (38 mm), blade type RB) was inserted into the obtained needle puncture detection sheet on the whitening resin layer side to form a puncture hole 0.80 mm in diameter which penetrated the needle puncture detection sheet. After formation of the puncture hole, the needle puncture detection sheet was placed in a position 1 mm away from the upper side of a gray rubber stopper with an L value of 60. It was examined whether an observer having a visual acuity of 0.7 in both eyes could visually confirm the puncture hole of the needle puncture detection sheet in this state at observation distances of 2 m, 3 m, and 4 m, and evaluated according to the following criteria. The results are shown in Table 1.
Puncture hole could be clearly confirmed: A
Puncture hole could be confirmed: B
Puncture hole could not be confirmed: C

### (Evaluation of heat resistance)

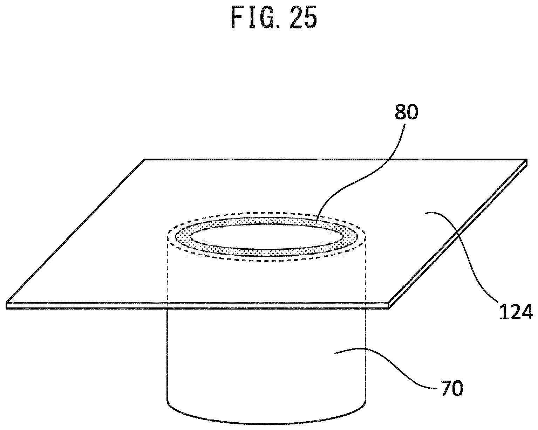

Evaluation of heat resistance was carried out using the test sample shown in FIG. 25. Essentially, the obtained needle puncture detection sheet (124) was cut into 50 mm×50 mm squares, and secured to the circular surface of the cylindrical rubber stopper (70) with a diameter of 25 mmϕ and a height of 29 mm by an adhesive (80) applied in a circle.

These test samples were observed visually after being boiled for 40 minutes in water at 100 °C, and evaluated according to the following criteria. The results are shown in Table 1.
No change observed in the needle puncture detection sheet: A
Needle puncture detection sheet changed, but no welding between sheet surfaces: B
Needle puncture detection sheet changed, and sheet surfaces welded: C

### <Examples 2 and 3, and Comparative Example 1>

Except for using a film 100 µm in thickness obtained by hot pressing pellets of each of the resins shown in Table 1 as the whitening resin layer or in place of the whitening resin layer, a needle puncture detection sheet having a configuration of a whitening resin layer / a sealant layer or a resin layer / a sealant layer was prepared in the same manner as in Example 1, and evaluated in terms of puncture hole visibility and heat resistance. The results are shown in Table 1.

### <Comparative Example 2>

Except for using the resin films shown in Table 1 in place of the whitening resin layer, a needle puncture detection sheet having a configuration of a resin layer / a sealant layer was prepared in the same manner as in Example 1, and evaluated in terms of puncture hole visibility and heat resistance. The results are shown in Table 1.

### <Comparative Example 4>

### (Creating the needle puncture detection sheet)

Pellets of high impact polystyrene (HIPS) (Toyo Styrene Co., Ltd., product name "Toyo Styrene HI H700 natural color") were hot pressed to prepare a film 100 µm in thickness, which was used as the whitening resin layer. A cream-colored LDPE (Tokyo Printing Ink Mfg. Co., Ltd., product name "PEX 3110 CREAM", L value 76, thickness 100 µm) was applied as a colored resin layer to this whitening resin layer via an adhesive. Next, an easy-to-peel film (Mitsui Chemicals Tohcello Co., Ltd., product name "CMPS013C#30") was applied as a sealant layer to the surface on the cream-colored LDPE film side via an adhesive to prepare a needle puncture detection sheet having a configuration of a whitening resin layer / a colored resin layer / a sealant layer.

### (Evaluation)

Using the needle puncture detection sheet obtained, puncture hole visibility and heat resistance were evaluated in the same manner as in Example 1. The results are shown in Table 1.

### <Examples 5 to 7>

Except for using each of the resin films shown in Table 1 as a colored resin layer, a needle puncture detection sheet having a configuration of a whitening resin layer / a colored resin layer / a sealant layer was prepared in the same manner as in Example 4, and evaluated in terms of puncture hole visibility and heat resistance. The results are shown in Table 1.

### <Example 8>

### (Creating the needle puncture detection sheet)

Black pigment (Hayashi Chemical LLC., activated carbon) was added as 20 mass% to pellets of high impact polystyrene (HIPS) (Toyo Styrene Co., Ltd., product name "Toyo Styrene HI H700 natural color"), and a film 100 µm in thickness was prepared using a hot press, the film being used as a colored whitening resin layer. The L value of this colored whitening resin layer was 30.

A needle puncture detection sheet having a configuration of a colored whitening resin layer / a sealant layer was prepared by applying an Easy Open Film (Mitsui Chemicals Tohcello Co., Ltd., product name "CMP S013C#30" as a sealant layer to the obtained colored whitening resin layer via an adhesive.

### (Evaluation)

Using the needle puncture detection sheet obtained, puncture hole visibility and heat resistance were evaluated in the same manner as in Example 1. The results are shown in Table 1.

### <Comparative Example 3>

Except for using a black LDPE film (Tokyo Printing Ink Mfg. Co., Ltd., product name "PEX 3286 Black 3S", L value 30, thickness 100 µm) as a resin layer in place of the whitening resin layer, a needle puncture detection sheet having a configuration of a resin layer / a sealant layer was prepared in the same manner as in Example 1, and evaluated in terms of puncture hole visibility and heat resistance. The results are shown in Table 1.

### (Measuring L value)

The L value was measured using a spectrophotometer by X-Rite Inc., US., product name "Spectro Eye" and a D50 light source at an observation viewing angle of 2° in a CIE Lab measuring mode according to a method pursuant with JIS Z8722.

### [Table 1]

**Table 1**

| | Layer configuration of needle puncture detection sheet | | | Puncture hole visibility | | | Heat resistance |
|---|---|---|---|---|---|---|---|
| | Whitening resin layer | Colored resin layer | Sealant layer | 2m | 3m | 4m | |
| Example 1 | HIPS | - | CMPS013C | A | A | B | C |
| Example 2 | block PP | - | CMPS013C | A | A | B | A |
| Example 3 | ABS | - | CMPS013C | A | A | B | C |
| Example 4 | HIPS | cream-colored LDPE (L-value 76) | CMPS013C | A | B | B | B |
| Example 5 | HIPS | light green-colored LDPE (L-value 74) | CMPS013C | A | A | A | B |
| Example 6 | HIPS | black LDPE (L-value 30) | CMPS013C | A | A | A | B |
| Example 7 | block PP | black LDPE (L-value 30) | CMPS013C | A | A | A | A |
| Example 8 | black HIPS (L-value 30) | - | CMPS013C | A | A | A | C |
| Comparative Example 1 | GPPS | - | CMPS013C | C | C | C | C |
| Comparative Example 2 | white LDPE | - | CMPS013C | C | C | C | B |
| Comparative Example 3 | black LDPE (L-value 30) | - | CMPS013C | C | C | C | B |

The abbreviations for materials composing layers in Table 1 have the following meanings.
HIPS: high impact polystyrene, Toyo Styrene Co., Ltd., product name "Toyo Styrene HI H700 natural color"
Block PP: polypropylene, block copolymer-type, Japan Polypropylene Corporation, product name "Novatec-PP BC3HF"
ABS: acrylonitrile-butadiene-styrene copolymer, Denka Company Limited, product name "Denka ABS Natural"
Cream-colored LDPE: Tokyo Printing Ink Mfg. Co., Ltd., product name "PEX 3110 CREAM", L value 76, thickness 100 µm
Light green-colored LDPE: Tokyo Printing Ink Mfg. Co., Ltd., product name "PEX H-1522 GREEN", L value 74, thickness 100 µm
Black LDPE: Tokyo Printing Ink Mfg. Co., Ltd., product name "PEX 3286 BLACK 3S" L value 30, thickness 100 µm
Black HIPS: blend of 80 mass% high impact polystyrene (Toyo Styrene Co., Ltd., product name "Toyo Styrene HI H700 natural color"), and 20 mass% black-colored pigment (Hayashi Chemical LLC, activated carbon)
GPPS: common polystyrene, clear, Toyo Styrene Co., Ltd., product name "Toyo Styrene MW1D"
White LDPE: Tokyo Printing Ink Mfg. Co., Ltd., product name "PEX 6800 WHITE A", thickness 100 µm
CMPS013C: Easy Open Film (Mitsui Chemicals Tohcello, Inc., product name "CMPS013C #30")

The GPPS of Comparative Example 1, the white LDPE of Comparative Example 2, and the black LDPE of Comparative Example 3, are not the prescribed "whitening resin layer" of the present invention, but are included under the "Whitening resin layer" column in the table for the sake of convenience.

With reference to Table 1, in the needle puncture detection sheets of Comparative Examples 1 to 3, which are conventional technology, the puncture hole formed by an injection needle could not be visually confirmed by an observer with a visual acuity of 0.7 in both eyes at an observation distance of 2 m, and thus, the puncture hole visibility was insufficient.

In contrast, in the needle puncture detection sheets of Examples 1 to 3, the area around the puncture hole in the whitening resin layer whitened to a width of about 0.3 mm such that the presence of the hole was emphasized, and an observer with a visual acuity of 0.7 in both eyes could clearly visually confirm the puncture hole at observation distances of 2 m and 3 m, and could visually confirm the puncture hole even at an observation distance of 4 m. In the needle puncture detection sheet of Example 4, in which a colored resin layer with an L value of 76 was provided between a whitening resin layer and a sealant layer, an observer with a visual acuity of 0.7 in both eyes could clearly visually confirm the puncture hole at an observation distance of 2 m, and could visually confirm the puncture hole at observation distances of 3 m and 4 m.

In the needle puncture detection sheets of Examples 5 and 6, in which a colored resin layer with an L value of 75 or less was provided between a whitening resin layer and a sealant layer, the difference in brightness between the whitened region around the puncture hole of the whitening resin layer and the colored resin layer was large, such that the whitened region was more clearly visually confirmed. Thus, for these needle puncture detection sheets, the presence of the puncture hole was emphasized, and an observer with a visual acuity of 0.7 in both eyes could clearly visually confirm the puncture hole at observation distances of 2 m, 3 m, and 4 m.

Example 7 relates to a needle puncture detection sheet of a laminate of a whitening resin layer and a sealant layer in which the whitening resin layer is colored to have an L value of 75 or less. Even in this case, an effect similar to that of the needle puncture detection sheets of Examples 5 and 6 was obtained, such that an observer having a visual acuity of 0.7 in both eyes could clearly visually confirm the puncture hole at observation distances of 2 m, 3 m, and 4 m.

In Examples 2 and 7 in which a block copolymer-type polypropylene was used as a whitening resin layer, the needle puncture detection sheet did not deform even when boiled at 100 °C for 40 minutes, demonstrating high heat resistance.

Even when the diameter of the injection needle was changed from 0.6 mm to 0.4 mm, results similar to the above were obtained.

### <Example 9>

### (Creating the needle puncture detection sheet)

A film made to a thickness of 50 µm by placing pellets of block copolymer-type polypropylene (block PP) (Japan Polypropylene Company, product name "NovatecPP BC 6DRF") as a whitening resin layer in an inflation film-forming machine was used.

A film made to a thickness of 50 µm by placing pellets of random polypropylene (random PP) (Japan Polypropylene Company, product name "Wintec WFX6") as a reinforcement layer in an inflation film-forming machine was used.

A film wherein a gravure printing ink (Toyo Ink Co., Ltd., product name "Lioalpha R92 Charcoal") was printed on one side of a polyethylene terephthalate (PET) film (Toyobo Co., Ltd., product name "E5100", thickness 12 µm) as a colored resin layer was used.

An Easy Open Film (Mitsui Chemicals Tohcello Co., Ltd., product name "CMPS013C#30" was used as is as a sealant layer.

Reinforcement layers were laminated on both sides of a whitening resin layer each using heat fusion to obtain a laminate with a three-layered configuration of reinforcement layer / whitening resin layer / reinforcement layer.

By laminating a colored resin layer and a sealant layer in order on one side of a laminate having the above three-layered configuration, the needle puncture detection sheet of Example 9 was prepared.

### (Evaluation of the visibility of the puncture hole)

An injection needle was inserted into the surface on the side of the whitening resin layer of the obtained needle puncture detection sheet, piercing the needle puncture detection sheet and forming a puncture hole. The state of whitening around the puncture hole of the whitening resin layer in the needle puncture detection sheet after puncture hole formation was investigated. Additionally, the needle puncture detection sheet after puncture hole formation was placed in a position 1 mm away from the upper side of a gray rubber stopper with an L value of 60. It was examined whether an observer having a visual acuity of 0.7 in both eyes could visually confirm the puncture hole of the needle puncture detection sheet in this state at an observation distance of 3 m, and evaluated according to the following criteria.

The area around the puncture hole in the whitening resin layer whitened to a width of 0.2 mm or more, and the puncture hole of the needle puncture detection sheet was clearly confirmed: A

The area around the puncture hole in the whitening resin layer whitened to a width of less than 0.2 mm, and the puncture hole of the needle puncture detection sheet was not visually confirmed: C

Two types of injection needle, product name "NN-2138R" (gauge 21G (0.80 mm), needle length 1+1/2 inch (38 mm), RB-type) and product name "NN-2725R" (gauge 27G (0.40 mm) needle length 1+1/2 inch (38 mm), RB-type), both by Terumo Corp., were used and the evaluation results of each are shown in Table 2.

### (Evaluation of strength)

### i) scratch resistance

Scratch resistance was evaluated using the test sample shown in FIG. 25. That is, the obtained needle puncture detection sheet (124) was cut into 50 mm×50 mm squares, and secured to the circular surface of the cylindrical rubber stopper (70) with a diameter of 25 mmϕ and a height of 29 mm by an adhesive (80) applied in a circle.

While the end of the rubber stopper on which the test sample sheet was not secured was held and secured by the test device, roughly the center of the secured sheet was scratched with the corner of a 10 mm×10 mm×150 mm metal prism. The condition of the sheet after scratching was visually observed and evaluated according to the following criteria. The evaluation results are shown in Table 2.
White linear scratch marks did not form where the sheet was scratched: A
White linear scratch marks formed where the sheet was scratched: C

### ii) bending resistance (evaluation of grasp resistance)

Similarly to the evaluation of scratch resistance, the evaluation of bending resistance was performed using test samples in which 50 mm×50 mm square sheets were secured to a cylindrical rubber stopper with a diameter of 25 mmϕ and a height of 29 mm via an adhesive.

The samples were bent by being grasped along with the rubber stopper by a hand, and the condition of the sheets thereafter was visually observed, and evaluated according to the following criteria. The evaluation results are shown in Table 2.
White linear bend marks did not form along the sheet bends: A
White linear bend marks did form along the sheet bends: C

### (Evaluation of heat resistance)

Similarly to the evaluation of scratch resistance, the evaluation of heat resistance was performed using test samples in which 50 mm×50 mm square sheets were secured to a cylindrical rubber stopper with a diameter of 25 mmϕ and a height of 29 mm via an adhesive.

The samples were boiled in 100 °C water for 40 minutes, and the condition of the sheets thereafter was visually observed, and evaluated according to the following criteria. The evaluation results are shown in Table 2.

The needle puncture detection sheet did not deform: A

The needle puncture detection sheet deformed, but no fusion seen between sheet surfaces: B

The needle puncture detection sheet deformed, and the sheet surfaces fused: C

### <Examples 10 to 33>

Except for selecting the type of whitening resin layer, reinforcement layer and colored resin layer, and the lamination method for the whitening resin layer and the reinforcement layer as respectively indicated in Table 2, a needle puncture detection sheet was prepared in the same manner as in Example 9, and evaluated in each metric. When the reinforcement layers on each side of the whitening resin layer were different, the colored resin layer and the sealant layer were laminated on the surface of the reinforcement layer indicated in the column on the right in Table 2. The evaluation results are shown in Table 2.

### <Examples 34 to 38>

### (Creating the needle puncture detection sheets)

The respective materials indicated in Table 2 were used as a whitening resin layer and a reinforcement layer, and the reinforcement layer was laminated on one side of the whitening resin layer according to the respective methods indicated in Table 2 to obtain a laminate with a two-layer configuration of a reinforcement layer / a whitening resin layer. On the surface of the whitening resin layer of this 2-layered laminate, a colored resin layer and a sealant layer indicated in Table 2 were laminated in order to prepare each of the needle puncture detection sheets.

### (Evaluation)

Each of the above needle puncture detection sheets was evaluated in each metric in the same manner as in Example 9. The evaluation results are shown in Table 2.

### <Examples 39 to 46>

### (Creating the needle puncture detection sheets)

The respective materials indicated in Table 2 were used as a whitening resin layer and a reinforcement layer, and the reinforcement layer was laminated on one side of the whitening resin layer according to the respective methods indicated in Table 2 to obtain a laminate with a two-layer configuration of a whitening resin layer / a reinforcement layer. On the surface of the reinforcement layer of this 2-layered laminate, a colored resin layer and a sealant layer indicated in Table 2 were laminated in order to prepare each of the needle puncture detection sheets.

### (Evaluation)

Each of the above needle puncture detection sheets was evaluated in each metric in the same manner as in Example 9. The evaluation results are shown in Table 2.

### <Comparative Examples 4 and 5>

Each of the resin layers indicated in Table 3 were used in place of a whitening resin layer, and by laminating a sealant layer listed in Table 3 on one side thereof, each of the needle puncture detection sheets was prepared, and then evaluated in each metric in the same manner as in Example 9. The evaluation results are shown in Table 3.

### [Table 2]

**Table 2**

| | Configuration | | | | | | Evaluation results | | | | |
|---|---|---|---|---|---|---|---|---|---|---|---|
| | Reinforcement layer | Whitening resin layer | Reinforcement layer | Lamination method for whitening resin layer / reinforcement layer | Colored resin layer | Sealant layer | Puncture hole visibility | | Scratch resistance | Bending resistance | Heat resistance |
| | | | | | | | 21G 0.80mmcp | 27G 0.40mmϕ | | | |
| Example 9 | random PP 50µm | block PP 50µm | random PP 50µm | heat fusion | print film | CMPS | A | A | A | A | A |
| Example 10 | homo PP 50µm | block PP 50µm | homo PP 50µm | heat fusion | print film | CMPS | A | A | A | A | A |
| Example 11 | TPE 100µm | block PP 50µm | TPE 100µm | heat fusion | print film | CMPS | A | A | A | A | A |
| Example 12 | random PP 50µm | block PP 50µm | random PP 50µm | dry lamination | color film | CMPS | A | A | A | A | A |
| Example 13 | homo PP 50µm | block PP 50µm | homo PP 50µm | dry lamination | color film | CMPS | A | A | A | A | A |
| Example 14 | TPE 100µm | block PP 50µm | TPE 100µm | dry lamination | color film | CMPS | A | A | A | A | A |
| Example 15 | LLDPE 50µm | block PP 50µm | LLDPE 50µm | dry lamination | color film | CMPS | A | A | A | A | A |
| Example 16 | PET 50µm | block PP 50µm | PET 50µm | dry lamination | color film | CMPS | A | A | A | A | A |
| Example 17 | PET 50µm | block PP 50µm | random PP 50µm | dry lamination | print film | CMPS | A | A | A | A | A |
| Example 18 | random PP 50µm | block PP 50µm | PET 50µm | dry lamination | print film | CMPS | A | A | A | A | A |
| Example 19 | TPE 100µm | block PP 50µm | random PP 50µm | heat fusion | print film | CMPS | A | A | A | A | A |
| Example 20 | random PP 50µm | block PP 50µm | TPE 100µm | heat fusion | print film | CMPS | A | A | A | A | A |
| Example 21 | PP+PE 50µm | block PP 50µm | PP+PE 50µm | heat fusion | print film | CMPS | A | A | A | A | A |
| Example 22 | PP+PE 50µm | block PP 50µm | PP+PE 50µm | dry lamination | print film | CMPS | A | A | A | A | A |

### [Table 3]

**Table 3**

| | Configuration | | | | | | Evaluation results | | | | |
|---|---|---|---|---|---|---|---|---|---|---|---|
| | Reinforcement layer | Whitening resin layer | Reinforcement layer | Lamination method for whitening resin layer / reinforcement layer | Colored resin layer | Sealant layer | Puncture hole visibility | | Scratch resistance | Bending resistance | Heat resistance |
| | | | | | | | 21G 0.80mmcp | 27G 0.40mmϕ | | | |
| Example 23 | random PP 50µm | HIPS 50µm | random PP 50µm | dry lamination | print film | CMPS | A | A | A | C | B |
| Example 24 | homo PP 50µm | HIPS 50µm | homo PP 50µm | dry lamination | print film | CMPS | A | A | A | C | B |
| Example 25 | TPE 100µm | HIPS 50µm | TPE 100µm | dry lamination | print film | CMPS | A | A | A | C | B |
| Example 26 | LLDPE 50µm | HIPS 50µm | LLDPE 50µm | dry lamination | print film | CMPS | A | A | A | C | B |
| Example 27 | PET 50µm | HIPS 50µm | PET 50µm | dry lamination | print film | CMPS | A | A | A | C | B |
| Example 28 | random PP 50µm | ABS 50µm | random PP 50µm | dry lamination | print film | CMPS | A | A | A | C | B |
| Example 29 | homo PP 50µm | ABS 50µm | homo PP 50µm | dry lamination | print film | CMPS | A | A | A | C | B |
| Example 30 | TPE 100µm | ABS 50µm | TPE 100µm | dry lamination | print film | CMPS | A | A | A | C | B |
| Example 31 | LLDPE 50µm | ABS 50µm | LLDPE 50µm | dry lamination | print film | CMPS | A | A | A | C | B |
| Example 32 | PET 50µm | ABS 50µm | PET 50µm | dry lamination | print film | CMPS | A | A | A | C | B |
| Example 33 | LLDPE 50µm | 3A/LDPE 50µm | LLDPE 50µm | heat fusion | print film | CMPS | A | A | A | A | B |
| Example 34 | random PP 50µm | block PP 50µm | - | heat fusion | print film | CMPS | A | A | C | A | A |
| Example 35 | homo PP 50µm | block PP 50µm | - | heat fusion | print film | CMPS | A | A | C | A | A |

### [Table 4]

**Table 4**

| | Configuration | | | | | | Evaluation results | | | | |
|---|---|---|---|---|---|---|---|---|---|---|---|
| | Reinforcement layer | Whitening resin layer | Reinforcement layer | Lamination method for whitening resin layer / reinforcement layer | Colored resin layer | Sealant layer | Puncture hole visibility | | Scratch resistance | Bending resistance | Heat resistance |
| | | | | | | | 21G 0.80mmϕ | 27G 0.40mmϕ | | | |
| Example 36 | TPE 100µm | block PP 50µm | - | heat fusion | print film | CMPS | A | A | C | A | A |
| Example 37 | LLDPE 50µm | block PP 50µm | - | dry lamination | print film | CMPS | A | A | C | A | A |
| Example 38 | PET 50µm | block PP 50µm | - | dry lamination | print film | CMPS | A | A | C | A | A |
| Example 39 | - | block PP 50µm | random PP 50µm | heat fusion | print film | CMPS | A | A | A | C | A |
| Example 40 | - | block PP 50µm | homo PP 50µm | heat fusion | print film | CMPS | A | A | A | C | A |
| Example 41 | - | block PP 50µm | TPE 100µm | heat fusion | print film | CMPS | A | A | A | C | A |
| Example 42 | - | block PP 50µm | LLDPE 50µm | dry lamination | print film | CMPS | A | A | A | C | A |
| Example 43 | - | block PP 50µm | PET 50µm | dry lamination | print film | CMPS | A | A | A | C | A |
| Example 44 | - | block PP 50µm | PMMA 50µm | dry lamination | print film | CMPS | A | A | A | C | B |
| Example 45 | - | ABS 50µm | PMMA 50µm | heat fusion | print film | CMPS | A | A | A | C | C |
| Example 46 | - | HIPS 50µm | PMMA 50µm | heat fusion | print film | CMPS | A | A | A | C | C |

### [Table 5]

**Table 5**

| | Configuration | | Evaluation results | | | | |
|---|---|---|---|---|---|---|---|
| | Resin layer | Sealant layer | Puncture hole visibility | | Scratch resistance | Bending resistance | Heat resistance |
| | | | 21G 0.80mmϕ | 27G 0.40mmcp | | | |
| Comparative Example 4 | random PP 50µm | CMPS | C | C | A | A | A |
| Comparative Example 5 | homo PP 50µm | CMPS | C | C | A | A | A |

The abbreviations for materials composing each layer shown in Table 2 and Table 3 have the following meanings.

### [Whitening resin layer]

Block PP: a film made by placing pellets of block copolymer-type polypropylene by the Japan Polypropylene Company, product name "NovatecPP BC6DRF" in an inflation film-forming machine

HIPS: a film made by hot pressing high impact polystyrene by Toyo Styrene Co., Ltd., product name "Toyo Styrene HI H700 natural color"

ABS: a film made by hot pressing acrylonitrile-butadiene-styrene resin by Denka Company Limited, product name "Denka ABS Natural"

3A/LDPE: a film formed by blending 20 parts by mass of zeolite (Union Showa K.K., product name "Molecular Sieve 3A") with 80 parts by mass of pellets of low density polyethylene (Tosoh Corporation, product name "Petrosen 190") in a Banbury mixer, pelletizing with an extruder, and then placing in an inflation film-forming machine

### [Reinforcement layer]

Random PP: a film made by placing pellets of metallocene polypropylene by the Japan Polypropylene Company, product name "Wintec WFX6", in an inflation film-forming machine

Homo PP: a film made by placing pellets of homopolypropylene by SunAllomer Ltd., product name "SunAllomer PC412A", in an inflation film-forming machine

TPE: a film made by hot pressing pellets of olefin-based thermoplastic elastomer by ExxonMobil Japan, product name "Santprene Thermoplastic Vulcaninzate"

LLDPE: a film made by placing metallocene linear low density polyethylene by Prime Polymer Co., Ltd., product name "Evolue SP2520", in an inflation film-forming machine

PET: a polyethylene terephthalate film by Toyobo Co., Ltd., product name "E5100"

PP+PE: a film made by drying blending the random PP above with LDPE (Tosoh Corporation, low density polyethylene, product name "Petrosen 190") in a mass ratio of 1:1, and placing in an inflation film-forming machine

PMMA: a film made by hot pressing polymethyl methacrylate by Mitsubishi Chemical Corporation, product name "Acrypet"

### [Colored resin layer]

Printing film: a film made by printing gravure printing ink (Toyo Ink Co., Ltd., product name "Lioalpha R92 Charcoal") on one side of a polyethylene terephthalate (PET) film (Toyobo Co., Ltd., product name "E5100", thickness 12 µm)

Color film: a black color film by Tokyo Printing Ink Mfg. Co., Ltd., product name "PEX 3286 Black 3S"

### [Sealant layer]

CMPS: Mitsui Chemicals Tohcello Co., Ltd., Easy Open Film, product name "CMPS013C#30"

### [Resin layer (Comparative Examples 4 and 5)]

Random PP: a film made by placing pellets of metallocene polypropylene by the Japan Polypropylene Company, product name "Windec WFX6", in an inflation film-forming machine

Homo PP: a film made by placing pellets of homopolypropylene by SunAllomer Ltd., product name "SunAllomer PC412A", in an inflation film-forming machine

With reference to Table 3, the sheets of Comparative Examples 4 and 5, which do not have a whitening resin layer, had visibility of the puncture hole formed by an injection needle that was extremely poor.

In contrast, as shown in Table 2, in the needle puncture detection sheets of Examples 9 to 46, which have a reinforcement layer on one side or both sides of the whitening resin layer, the visibility of the puncture hole was excellent, and scratch resistance, bending resistance, or both was excellent.

The needle puncture detection sheets which used a block copolymer-type of polypropylene as the whitening resin layer tended to have particularly excellent heat resistance (in particular, Examples 9 to 22 and 36 to 43).

In the needle puncture detection sheets of Examples 44 to 46, which used a layer of polymethyl methacrylate (PMMA) as the reinforcement layer, not only did the area around the puncture hole in the whitening resin layer simply whiten, radial (in the shape of a "*") cracks were seen to occur centering around the puncture hole in the reinforcement layer (PMMA layer), and as a result, the visibility of the puncture hole of the needle puncture detection sheet was particularly high.

### REFERENCE SIGNS LIST

- 10: whitening resin layer
- 11: colored whitening resin layer
- 15: auxiliary layer
- 20: sealant layer
- 21: colored sealant layer
- 31: colored resin layer
- 32: partially colored resin layer
- 32a: colored region
- 32b: non-colored region
- 40: reinforcement layer
- 50: puncture hole
- 60: whitened region
- 70: rubber stopper
- 80: adhesive
- 100-124: needle puncture detection sheet

## Claims

1. A needle puncture detection sheet having a whitening resin layer, wherein the whitening resin layer is a resin layer that, when a puncture hole is formed by inserting an RB type injection needle having a diameter of 0.80 mm, whitens to a width of 0.2 mm or more around the puncture hole.

2. The needle puncture detection sheet of claim 1, wherein the whitening resin layer is a layer of resin having a sea island-type microphase separation structure composed of a continuous phase comprising a hard segment and a dispersed phase comprising a soft segment.

3. The needle puncture detection sheet of claim 2, wherein the hard segment comprises one or more selected from the group consisting of polystyrene, crystalline polyolefin, and acrylonitrile-styrene copolymer, and the soft segment comprises one or more selected from the group consisting of butadiene rubber, styrene-butadiene rubber, and amorphous polyolefin.

4. The needle puncture detection sheet of any one of claims 1 to 3, wherein the whitening resin layer is a layer of resin of one or more selected from the group consisting of high impact polystyrene, block copolymer type polypropylene, and acrylonitrile-butadiene-styrene copolymer.

5. The needle puncture detection sheet of any one of claims 1 to 3, wherein the whitening resin layer is a layer of block copolymer-type polypropylene.

6. The needle puncture detection sheet of any one of claims 1 to 5, wherein the whitening resin layer is colored.

7. The needle puncture detection sheet of claim 6, wherein the L-value of the whitening resin layer is 75 or less.

8. The needle puncture detection sheet of any one of claims 1 to 7, wherein the needle puncture detection sheet has a reinforcement layer on either one side or both sides of the whitening resin layer.

9. The needle puncture detection sheet of claim 8, wherein the reinforcement layer is a layer of a thermoplastic resin that does not whiten when punctured by a needle.

10. The needle puncture detection sheet of any one of claims 1 to 7, additionally having a sealant layer or an adhesive layer laminated on the whitening resin layer.

11. The needle puncture detection sheet of claim 10, wherein the sealant layer or adhesive layer is colored.

12. The needle puncture detection sheet of claim 11, wherein the L-value of the sealant layer or the adhesive layer is 75 or less.

13. The needle puncture detection sheet of any one of claims 1 to 7, additionally having a colored resin layer laminated on the whitening resin layer.

14. The needle puncture detection sheet of any one of claims 10 to 12, additionally having a colored resin layer, wherein the whitening resin layer, the colored resin layer and the sealant layer or adhesive layer are laminated in this order.

15. The needle puncture detection sheet of claim 8 or 9, additionally having a colored resin layer, wherein
the reinforcement layer, the whitening resin layer, and the colored resin layer are laminated in this order;
the whitening resin layer, the reinforcement layer, and the colored resin layer are laminated in this order; or
the reinforcement layer, the whitening resin layer, the reinforcement layer, and the colored resin layer are laminated in this order.

16. The needle puncture detection sheet of claim 8 or 9, additionally having a sealant layer or adhesive layer, wherein
the reinforcement layer, the whitening resin layer, and the sealant layer or adhesive layer are laminated in this order;
the whitening resin layer, the reinforcement layer, and the sealant layer or the adhesive layer are laminated in this order; or
the reinforcement layer, the whitening resin layer, the reinforcement layer, and the sealant layer or the adhesive layer are laminated in this order.

17. The needle puncture detection sheet of claim 8 or 9, additionally having a colored resin layer and a sealant layer or an adhesive layer, wherein
the reinforcement layer, the whitening resin layer, the colored resin layer, and the sealant layer or adhesive layer are laminated in this order;
the whitening resin layer, the reinforcement layer, the colored resin layer, and the sealant layer or the adhesive layer are laminated in this order; or
the reinforcement layer, the whitening resin layer, the reinforcement layer, the colored resin layer, and the sealant layer or the adhesive layer are laminated in this order.

18. The needle puncture detection sheet of any one of claims 13 to 15 and 17, wherein the L-value of the colored resin layer is 75 or less.

19. The needle puncture detection sheet of any one of claims 1 to 18, which is a lid material.

20. A lidded container for liquid medicine having a container having an opening part, a liquid medicine stored in the container, a stopper that seals the opening part of the container, and a lid material covering the stopper, wherein the lid material is the needle puncture detection sheet of claim 19.
